# EUROPEAN PATENT APPLICATION

(11) **EP 4 596 924 A1**
(43) Date of publication of application: **06.08.2025**
(21) Application number: 23870686.5
(22) Date of filing: 25.09.2023
(51) Int. Cl.: F16K 1/02, F16K 31/04, F16K 27/02, F25B 41/34

(54) **ELECTRIC VALVE**

(30) Priority: 29.09.2022 CN 202211204525
(71) Applicant: ZHEJIANG SANHUA AUTOMOTIVE COMPONENTS CO., LTD., Hangzhou, Zhejiang 310018 (CN)
(72) Inventor: PAN, Yiyuan, Hangzhou, Zhejiang 310018 (CN); CHEN, Rongbin, Hangzhou, Zhejiang 310018 (CN)
(74) Representative: Maikowski & Ninnemann Patentanwälte Partnerschaft mbB
(86) International application number: PCT/CN2023/120989
(87) International publication number: WO 2024/067455

(57) **Abstract**

An electric valve, comprising a nut assembly (5) and a sleeve (6). The nut assembly (5) comprises a plastic member (51) and a connection portion (52); the sleeve (6) comprises an opening portion (61); the connection portion (52) comprises an upper end face portion (521); the opening portion (61) is fixedly welded to the upper end face portion (521); and at least part of the upper end face portion (521) is arranged at the outer side of the opening portion (61) in a radial direction of the electric valve. The sleeve (6) is fitted with the upper end face portion (521) of the connection portion (52) in the above-mentioned manner, thereby facilitating the simplification of a welding structure of the electric valve.

## Description

The present application claims the priority to Chinese Patent Application No. 202211204525.8, titled "ELECTRIC VALVE", filed with the China National Intellectual Property Administration on September 29, 2022, the entire content of which is incorporated herein by reference.

### FIELD

The present application relates to the technical field of fluid control, and in particular, to an electric valve.

### BACKGROUND

An electric valve includes a nut assembly, a valve seat assembly and a sleeve, the nut assembly has a connecting plate, the nut assembly is welded and fixed to the valve seat assembly through the connecting plate, and the sleeve is also fixed to the valve seat assembly by welding. The valve seat assembly is provided with a step matching structure, and the sleeve abuts against and is matched with the step matching structure, and then is welded to the step matching structure. In this way, the welding structure of the electric valve is relatively complex.

### SUMMARY

An object of the present application is to provide an electric valve, which is beneficial to simplifying the welding structure of the electric valve.

To achieve the above object, the following technical solution is provided according to an embodiment of the present application.

An electric valve includes a nut assembly and a sleeve, where the nut assembly includes a plastic member and a connecting portion, the connecting portion is fixed to the plastic member, the connecting portion is made of a metal material, and the sleeve is made of a metal material;
the sleeve includes an opening portion, the connecting portion includes an upper end face portion, the opening portion is fixed to the upper end face portion by welding, and at least part of the upper end face portion is located on an outer side of the opening portion along a radial direction of the electric valve.

In the embodiment of the present application, the electric valve includes the nut assembly and the sleeve, and the nut assembly includes the plastic member and the connecting portion. The sleeve includes the opening portion, and the connecting portion includes the upper end face portion. The opening portion is fixed to the upper end face portion by welding, and at least part of the upper end face portion is located on the outer side of the opening portion along the radial direction of the electric valve. The sleeve is matched with the upper end face portion of the connecting portion in the above manner, which facilitates simplifying the welding structure of the electric valve.

### BRIEF DESCRIPTION OF THE DRAWINGS

FIG. 1 is a schematic front view of an electric valve according to a first embodiment of the present application;
FIG. 2 is a schematic sectional view of the electric valve in FIG. 1 taken along line A-A;
FIG. 3 is a three-dimensional structural diagram of a valve component in FIG. 2 from a viewpoint;
FIG. 4 is a schematic front view of the valve component in FIG. 3;
FIG. 5 is a schematic sectional view of the valve component in FIG. 4 taken along line B-B;
FIG. 6 is a schematic enlarged structural view of part A in FIG. 5;
FIG. 7 is a schematic sectional view of a valve seat assembly in FIG. 2 from a viewpoint after a crimping portion of the valve seat assembly is riveted;
FIG. 8 is a schematic sectional view of the valve seat assembly in FIG. 2 from a viewpoint before the crimping portion thereof is riveted;
FIG. 9 is a schematic sectional view of a first valve seat portion in FIG. 2 from a viewpoint before a crimping portion of the first valve seat portion is riveted;
FIG. 10 is a schematic sectional view of a second valve seat portion in FIG. 2 from a viewpoint;
FIG. 11 is a schematic front view of a nut assembly in FIG. 2;
FIG. 12 is a schematic sectional view of the nut assembly in FIG. 11 taken along line C-C;
FIG. 13 is a three-dimensional structural diagram of a connecting portion in FIG. 12 from a viewpoint;
FIG. 14 is a schematic top view of the connecting portion in FIG. 13;
FIG. 15 is a schematic front view of an electric valve according to a second embodiment of the present application;
FIG. 16 is a schematic sectional view of the electric valve in FIG. 15 taken along line D-D;
FIG. 17 is a schematic enlarged structural view of part B in FIG. 16;
FIG. 18 is a schematic sectional view of a valve component in FIG. 16 from a viewpoint;
FIG. 19 is a schematic sectional view of a nut assembly in FIG. 16 from a viewpoint;
FIG. 20 is a three-dimensional structural diagram of a connecting portion in FIG. 19 from a viewpoint;
FIG. 21 is a schematic top view of the connecting portion in FIG. 20;
FIG. 22 is a schematic enlarged structural view of part B in FIG. 16 according to another embodiment;
FIG. 23 is a schematic sectional view of an electric valve according to a third embodiment of the present application from a viewpoint;
FIG. 24 is a schematic enlarged structural view of part C in FIG. 23;
FIG. 25 is a schematic sectional view of a sleeve in FIG. 23 from a viewpoint;
FIG. 26 is a schematic enlarged structural view of part C of the electric valve in FIG. 23 according to the third embodiment of the present application;
FIG. 27 is a schematic front view of an electric valve according to a fifth embodiment of the present application;
FIG. 28 is a schematic sectional view of the electric valve in FIG. 27 taken along line E-E;
FIG. 29 is a schematic front view of a valve component in FIG. 28;
FIG. 30 is a schematic sectional view of the valve component in FIG. 29 taken along line F-F;
FIG. 31 is a schematic sectional view of a nut assembly in FIG. 28 from a viewpoint;
FIG. 32 is a three-dimensional structural diagram of a connecting portion in FIG. 31 from a viewpoint;
FIG. 33 is a schematic top view of the connecting portion in FIG. 32;
FIG. 34 is a schematic front view of an electric valve according to a sixth embodiment of the present application;
FIG. 35 is a schematic sectional view of the electric valve in FIG. 34 taken along line G-G;
FIG. 36 is a schematic sectional view of the electric valve in FIG. 34 taken along line H-H;
FIG. 37 is a schematic view of a combination structure of a valve component and a connection assembly in FIG. 34;
FIG. 38 is a three-dimensional structural diagram of the valve component in FIG. 34 from a viewpoint;
FIG. 39 is a schematic front view of an electric valve according to a seventh embodiment of the present application;
FIG. 40 is a schematic sectional view of the electric valve in FIG. 39 taken along line I-I;
FIG. 41 is a schematic sectional view of a valve component in FIG. 40 from a viewpoint;
FIG. 42 is a three-dimensional structural diagram of a nut assembly in FIG. 41;
FIG. 43 is a schematic front view of the nut assembly in FIG. 41;
FIG. 44 is a three-dimensional structural diagram of a connecting portion in FIG. 43 from a viewpoint;
FIG. 45 is a schematic top view of the connecting portion in FIG. 43; and
FIG. 46 is a schematic sectional view of a valve component of an electric valve according to another variation of the sixth embodiment from a viewpoint.

### DETAILED DESCRIPTION OF THE EMBODIMENTS

The present application is further described below with reference to the accompanying drawings and specific embodiments.

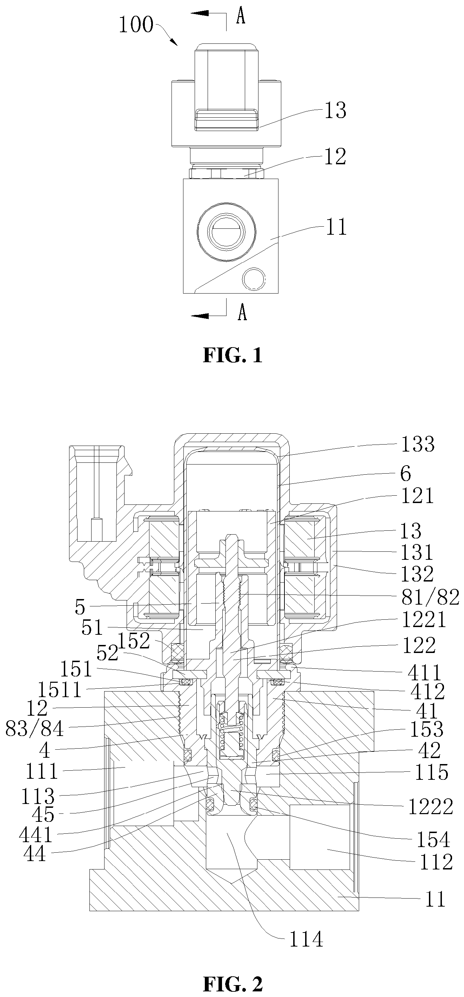

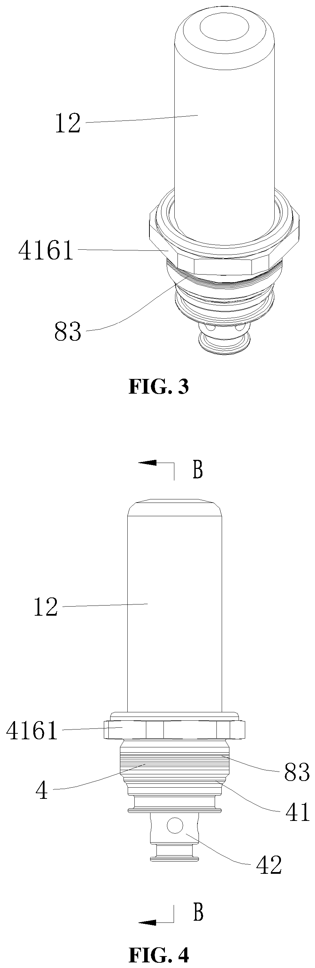

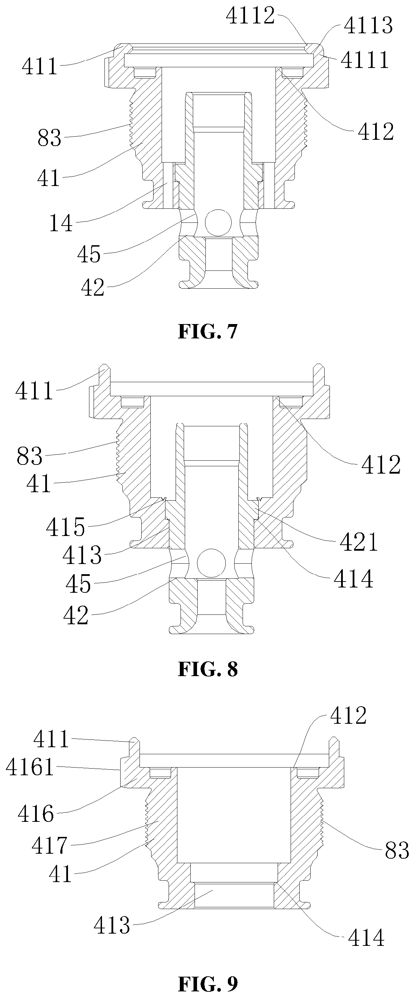

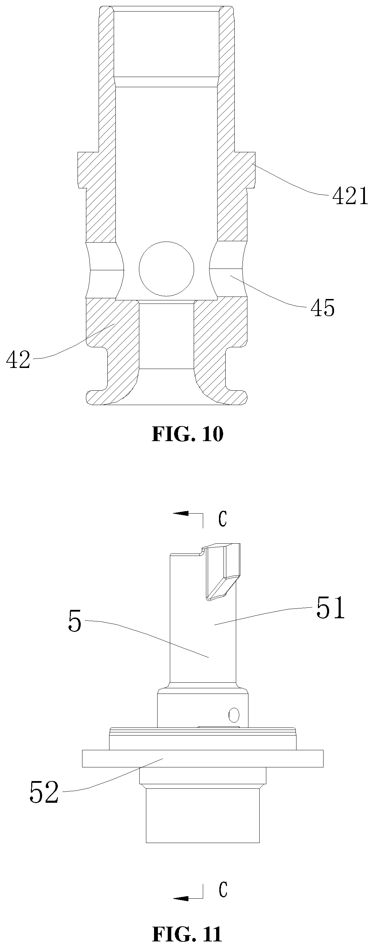

With reference to FIG. 1 to FIG. 14, an electric valve according to a first embodiment is illustrated. In the present application, the electric valve 100 includes an electronic expansion valve, and may be applied to a refrigerant system, such as a commercial or vehicle thermal management system, or may be applied to other systems requiring heat management, such as a thermal management system for a battery, a thermal management system for an electrical device, and the like.

With reference to FIG. 1 to FIG. 2, the electric valve 100 includes a valve body 11, a valve component 12, and a coil assembly 13. In the embodiment, the valve component 12 is fixedly connected to the valve body 11, and the coil assembly 13 is fixedly connected to the valve body 11. The valve body 11 has a valve body cavity 115, and at least part of the valve component 12 is located in the valve body cavity 115. In other embodiments, the coil assembly 13 may be fixedly connected to the valve component 12, and after the coil assembly 13 and the valve component 12 are assembled, the two are fixedly connected to the valve body 11. In the embodiment, the valve body 11 is a separate valve block, and in other embodiments, the valve body 11 may be a part of a system, for example, a part of a heat exchanger or a part of a flow channel plate. The coil assembly 13 includes a stator assembly 131 and an injection-molded body 132, the injection-molded body 132 covers at least part of the stator assembly 131 by injection molding. The coil assembly 13 has a chamber 133, and at least part of the valve component 12 is located in the chamber 133. The valve component 12 includes a valve seat assembly 4, a nut assembly 5, a sleeve 6, a rotor assembly 121 and a valve core assembly 122. At least part of the sleeve 6 is located in the chamber 133, the stator assembly 131 is located on an outer side of the sleeve 6, the rotor assembly 121 is located on an inner side of the sleeve 6, and the valve core assembly 122 is connected to the rotor assembly 121. When a predetermined current is applied to the stator assembly 131, an excitation magnetic field may be generated to drive the rotor assembly 121 to rotate, and the rotor assembly 121 drives the valve core assembly 122 to rotate. The valve core assembly 122 is in threaded engagement with the nut assembly 5 to convert the rotation of the rotor assembly 121 into an axial movement of the valve core assembly 122 relative to the valve seat assembly 4. In the embodiment, the valve core assembly 122 includes a lead screw portion 1221 and a valve core portion 1222, and the lead screw portion 1221 and the valve core portion 1222 are split structures and are connected together. The lead screw portion 1221 and the valve core portion 1222 may be connected by a fixed connection, a limited connection, or a transmission connection, etc. The lead screw portion 1221 is formed with an external thread 81, and the nut assembly 5 is formed with an internal thread 82 matched with the external thread 81. The lead screw portion 1221 is in threaded engagement with the nut assembly 5, and the rotation of the rotor assembly 121 is converted into an axial movement of the lead screw portion 1221 relative to the nut assembly 5. In other embodiments, the lead screw portion 1221 and the valve core portion 1222 may be of an integrate structure or be integrally formed. The valve seat assembly 4 has a valve port portion 44 having a valve port 441, and the valve core assembly 122 can move axially relative to the valve port 441. The valve core portion 1222 of the valve core assembly 122 cooperates with the valve port 441 to adjust the flow area of the valve port 441 or adjust the opening degree of the valve port 441, so that the flow rate of a refrigerant can be adjusted. For the convenience of description, the directions "upper" and "lower" are defined as upper and lower directions in FIG. 1, and only indicate relative positions, but do not represent an actual state of a product when the product is actually used. For example, in FIG. 1, the coil assembly 13 is located above the valve body 11, which does not mean that the coil assembly 13 must be located above the valve body 11 in actual use, because the electric valve may be mounted transversely or obliquely. In the case that the electric valve is mounted transversely, the coil assembly 13 may be located on the left or right side of the valve body 11. This case or similar cases are within the protection scope of the present application.

With reference to FIG. 2 to FIG. 6, and FIG. 10 to FIG. 13, in the embodiment, the nut assembly 5 includes a plastic member 51 and a connecting portion 52, the connecting portion 52 is fixed to the plastic member 51 by injection molding, interference fit, or gluing, or interference fit combined with gluing. In the embodiment, the connecting portion 52, as an injection-molded insert, is injection-molded to form the nut assembly 5, and the plastic member 51 covers part of the connecting portion 52. In the embodiment, the plastic member 51 covers an inner portion of the connecting portion 52. In the embodiment, the connecting portion 52 is made of a metal material, and the sleeve 6 is made of a metal material, such as a stainless steel. The plastic member 51 may specifically be made of a special engineering plastic or composite material with certain strength, such as a mechanically reinforced polyetheretherketone (PEEK) or a modified polyetheretherketone (PEEK), or a mechanically reinforced polyphenylene sulfide (PPS) or a modified polyphenylene sulfide (PPS). In the embodiment, the plastic member 51 is of an integrated structure and is integrally injection-molded. In other embodiments, the plastic member 51 may have separately formed structures, which are fixedly or limitedly connected together to form the plastic member 51. In the embodiment, the connecting portion 52 has a fixing reinforcement portion 523 at a position where the connecting portion 52 is connected to the plastic member 51, and the fixing reinforcement portion 523 is located on an inner portion of the connecting portion 52. At least part of the fixing reinforcement portion 523 is covered by the plastic member 51, for example, an inner periphery of the connecting portion 52 may be of a non-circular structure. For example, the inner side shape of a cross section of an inner side wall of the connecting portion 52 may be square, hexagonal, irregular circular with a partial straight edge, or quincunx, etc. This arrangement may improve the connection strength between the connecting portion 52 and the plastic member 51, and compared with the case where a side wall of the connecting portion 52 is of a circular structure, the connecting portion 52 can be prevented from rotating in a circumferential direction relative to the plastic member 51. In other embodiments, the inner periphery of the connecting portion 52 may be machined to form a groove structure, a protruding structure, a knurling structure or other structures with similar functions, or, the connecting portion 52 may be machined in an axial direction to form a through hole, a groove, a protrusion, or the like, or a combination of the above structures.

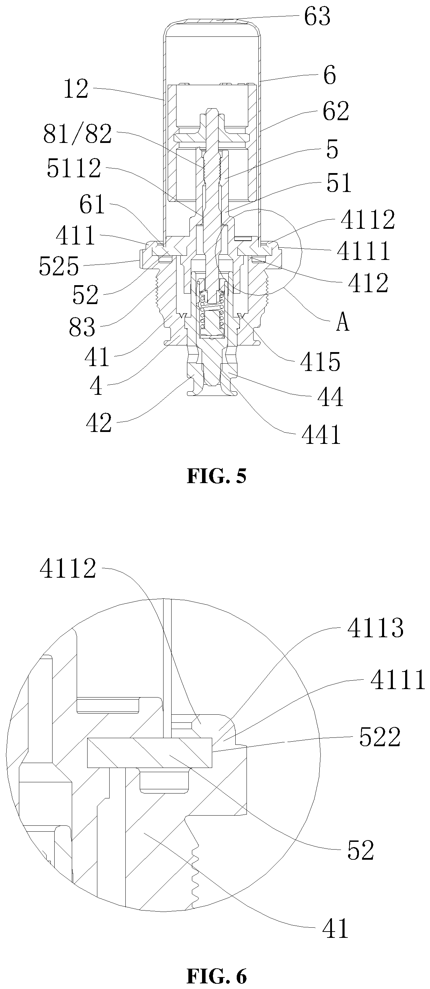

With reference to FIG. 2 and FIG. 5, in the embodiment, the sleeve 6 is fixedly connected to the connecting portion 52. Specifically, in the embodiment, the sleeve 6 includes an opening portion 61, a sleeve body 62 and a sleeve top 63. The opening portion 61 is closer to the connecting portion 52 than the sleeve top 63. The sleeve 6 has an opening at the opening portion 61, and an upper end of the sleeve 6 is closed by the sleeve top 63. The connecting portion 52 is made of stainless steel, and the sleeve 6 is made of stainless steel. The opening portion 61 of the sleeve 6 is fixed to the connecting portion 52 by welding, including laser welding and the like. In the embodiment, the opening portion 61 of the sleeve 6 is fixed to the connecting portion 52 by laser.

With reference to FIG. 2 to FIG. 9, the valve seat assembly 4 includes a first valve seat portion 41, and the first valve seat portion 41 includes a crimping portion 411 and a supporting portion 412. A lower end portion of the connecting portion 52 abuts against the supporting portion 412, so that the supporting portion 412 limits the connecting portion 52 so as to limit a lowermost position of the connecting portion 52 relative to the first valve seat portion 41. The lower end portion of the connecting portion 52 abuts against the supporting portion 412, including direct abutment or indirect abutment. After riveting, at least part of the crimping portion 411 extends toward a central axis of the nut assembly 5, at least part of the crimping portion 411 abuts against the connecting portion 52, and at least part of the crimping portion 411 is located above the connecting portion 52. The connecting portion 52 is limited by the crimping portion 411, and the crimping portion 411 limits the connecting portion 52 from moving away from the valve seat assembly 4 along the axial direction of the electric valve, and the connecting portion 52 is fixed to the first valve seat portion 41 by the crimping portion 411. In this way, the connection between the nut assembly 5 and the valve seat assembly 4 can be simplified, and compared with the case where the nut assembly 5 is welded to the valve seat assembly 4, a welding procedure may be reduced. Thus, the production cost is reduced.

With reference to FIG. 2 to FIG. 9, in the embodiment, the valve seat assembly 4 further includes a second valve seat portion 42, and the first valve seat portion 41 is fixedly or limitedly connected to the second valve seat portion 42. The first valve seat portion 41 is made of an aluminum material, which may reduce the weight of the valve seat assembly 4, thereby reducing the overall weight of the electric valve, and also facilitates the riveting and bending of the crimping portion 411, thereby reducing the difficulty of riveting. In the embodiment, the crimping portion 411 is located at an upper end of the first valve seat portion 41, the crimping portion 411 includes a base portion 4111 and an end portion 4112, and the end portion 4112 is located on an upper side of the base portion 4111. The end portion 4112 is bent towards the central axis of the nut assembly 5 by riveting, and at least part of the end portion 4112 is located above the connecting portion 52. Before riveting, the crimping portion 411 is formed by machining or other methods in advance. Before riveting, the end portion 4112 is substantially coaxial with the base portion 4111, and after riveting, the end portion 4112 is bent towards the central axis of the nut assembly 5. In the embodiment, the connecting portion 52 includes an outer edge 525 which is located at an outer periphery of the connecting portion 52. The end portion 4112 abuts against the outer edge 525 of the connecting portion 52, or, the end portion 4112 abuts against an upper end face of the connecting portion 52 close to the outer edge 525, or both of the above cases, so that the connecting portion 52 can be prevented from being disengaged from the valve seat assembly 4 in the axial direction. In this case, the outer edge of the connecting portion 52 is in clearance fit, abutting fit or interference fit with the base portion 4111, and the base portion 4111 can limit the position of the connecting portion 52 in the radial direction.

In other embodiments, the base portion 4111 may abut against the outer edge 525 of the connecting portion 52 to limit the axial position of the connecting portion 52. In yet another embodiment, the crimping portion 411 further includes a transition portion 4113 located between the base portion 4111 and the end portion 4112. The transition portion 4113 abuts against the outer edge 525 of the connecting portion 52 to limit the axial position or the radial position of the connecting portion 52. Alternatively, the end portion 4112 or the transition portion between the end portion 4112 and the base portion 4111 may abut against the outer edge of the connecting portion 52 to limit the radial position of the connecting portion 52.

In other embodiments, the crimping portion 411 may also be formed by pressing, and the first valve seat portion 41 is pressed by a tool to form the crimping portion 411, and the connecting portion 52 is fixed to the first valve seat portion 41 by the crimping portion 411.

With reference to FIG. 2 to FIG. 12, in the embodiment, the plastic member 51 of the nut assembly 5 includes a main body portion 511 and a nut portion 512. An outer diameter of the main body portion 511 is larger than that of the nut portion 512, and the main body portion 511 is relatively close to the valve seat assembly 4. The connecting portion 52 is connected to the main body portion 511 by injection molding. The nut portion 512 has a first through hole 5121, and the nut portion 512 has an internal thread 82 which is located on a wall forming the first through hole 5121. The lead screw portion 1221 passes through the first through hole 5121, and a portion of the lead screw portion 1221 extending out of the first through hole 5121 is connected to the rotor assembly 121 by welding, etc. An outer peripheral wall of the lead screw portion 1221 has an external thread 81 which is engaged with the internal thread 82, and the lead screw portion 1221 is in threaded engagement with the nut portion 512. In the embodiment, the nut portion 512 has a guide section 5112 which is located on a lower side of the internal thread 82. The lead screw portion 1221 has a portion matched with the guide section 5112, and the guide section 5112 can guide the lead screw portion 1221. In other embodiments, the guide section may be arranged on an upper side of the internal thread 82.

With reference to FIG. 2 to FIG. 10, in the embodiment, the valve seat assembly 4 further includes a second valve seat portion 42 which is generally hollow and cylindrical. At least part of the valve core assembly 122 is located in an inner cavity of the second valve seat portion 42. The second valve seat portion 42 has a valve port portion 44, and the valve port portion 44 has a valve port 441. The valve core assembly 122 can move axially relative to the valve port 441, and the valve core portion 1222 of the valve core assembly 122 is matched with the valve port 441 to adjust the flow area of the valve port 441, so that the flow rate of the refrigerant can be adjusted. The second valve seat portion 42 further has a side hole 45 located between the valve port portion 44 and the first valve seat portion 41. The first valve seat portion 41 has a mounting hole 413, and at least part of the second valve seat portion 42 is located in the mounting hole 413. In the embodiment, the second valve seat portion 42 extends through the first valve seat portion 41, and the first valve seat portion 41 is connected to the second valve seat portion 42, where the connection manner includes a fixed connection and a limited connection, etc.

In the embodiment, the valve body 11 includes a first flow channel 111, a second flow channel 112, a first cavity 113 and a second cavity 114. The first flow channel 111 is communicated with the first cavity 113, the second flow channel 112 is communicated with the second cavity 114, and the first cavity 113 can be communicated with the second cavity 114 through the valve port 441. In the embodiment, a cavity of the second valve seat portion 42 is communicated with the first cavity 113 through the side hole 45.

With reference to FIG. 2 to FIG. 10, in the embodiment, an outer peripheral wall of the second valve seat portion 42 is in interference fit with an inner peripheral wall forming the mounting hole 413. The first valve seat portion 41 has a stepped portion 414 which is located at the mounting hole 413. The second valve seat portion 42 has a flange portion 421, and a lower end face of the flange portion 421 abuts against a bottom surface of the stepped portion 414, thereby limiting the lowermost position of the second valve seat portion 42 relative to the first valve seat portion. The first valve seat portion 41 includes a limiting structure 415 which abuts against the flange portion 421, at least part of the limiting structure 415 is located above the flange portion 421, and the first valve seat portion 41 is limited by the limiting structure 415 from being disengaged from the second valve seat portion 42 in the direction away from the second valve seat portion 42. In the embodiment, the limiting structure 415 is formed by pressing, and the second valve seat portion 42 is pressed by a tool to form the limiting structure 415. The limiting structure 415 extends toward the central axis of the electric valve, and the second valve seat portion 42 is fixed to the first valve seat portion 41 by the limiting structure 415. This arrangement can facilitate the connection between the first valve seat portion 41 and the second valve seat portion 42, thus omitting a welding step. In other embodiments, the limiting structure 415 may also be pre-formed, and after riveting, part of the limiting structure 415 extends toward the central axis of the electric valve. In yet another embodiment, the first valve seat portion 41 may be fixed to the second valve seat portion 42 only by interference fit, or by interference fit combined with gluing, or by welding, or by threaded connection.

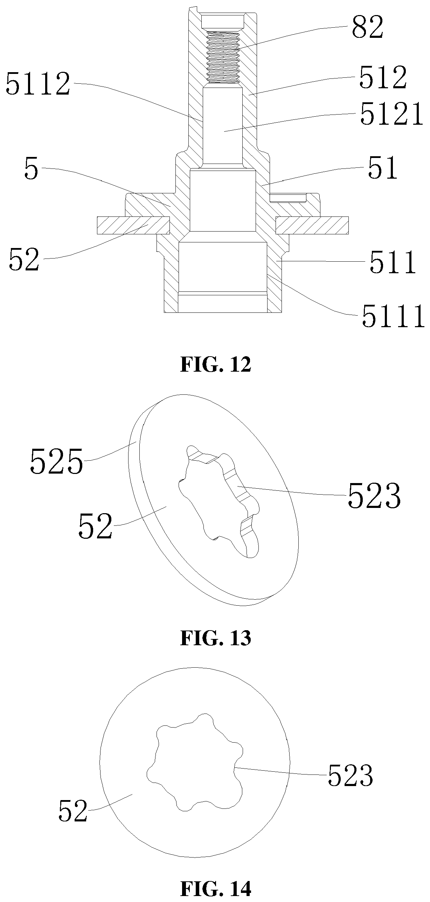

With reference to FIG. 5 and FIG. 12, in the embodiment, the main body portion 511 of the nut assembly 5 has a guide portion 5111 matched with the second valve seat portion 42. The second valve seat portion 42 is generally hollow and cylindrical, and an outer peripheral portion of the second valve seat portion 42 abuts against or is in clearance fit with the main body portion 511. In this way, the coaxiality of the second valve seat portion 42 and the valve core assembly 122 can be improved.

With reference to FIG. 2 to FIG. 8, in the embodiment, the first valve seat portion 41 has a balance hole 14 which runs through the first valve seat portion 41 along the axial direction of the electric valve. The number of balance holes 14 may be determined as required. In the embodiment, the number of balance holes 14 is two. The balance holes 14 are provided to balance the pressures of cavities corresponding to two ends of the balance holes 14, thereby reducing a force for opening the valve. In the embodiment, the first valve seat portion 41 is made of an aluminum material. Compared with the case where the first valve seat portion 41 is made of a material such as stainless steel, the difficulty of processing the balance hole 14 is reduced.

With reference to FIG. 2 to FIG. 9, in the embodiment, the valve body 11 of the electric valve has a valve body cavity 115, at least part of the valve seat assembly 4 is located in the valve body cavity 115, and the first cavity 113 is part of the valve body cavity 115. The first valve seat portion 41 is provided with an external thread portion 83, an inner peripheral wall forming the valve body cavity 115 is provided with an internal thread portion 84 engaged with the external thread portion 83, and the valve seat assembly 4 is fixed to the valve body 11 by threaded engagement.

With reference to FIG. 2 to FIG. 9, in the embodiment, the first valve seat portion 41 includes a first portion 416 and a second portion 417. The first portion 416 is located above the second portion 417, and the first portion 416 is closer to the coil assembly 13 than the second portion 417. The first portion 416 includes the supporting portion 412 and the crimping portion 411, and the second portion 417 has the external thread portion 83 which is arranged at an outer periphery of the second portion 417. The first portion 416 further has a matching edge 4161 which is located at an outer periphery of the first portion 416. The matching edge 4161 is used as an acting point for cooperating with an external tightening tool, for example, the matching edge 4161 may have a hexagonal structure or a quadrilateral structure. The external tightening tool, such as a hexagonal wrench, cooperates with the matching edge 4161 so as to screw the valve seat assembly 4 and the valve body 11 together. A lower end face of the first portion 416 abuts against the valve body 11 to limit the lowermost position of the valve seat assembly 4 relative to the valve body.

With reference to FIG. 2 to FIG. 6, the electric valve further includes a first sealing member 151 which is located between the connecting portion 52 and the first valve seat portion 41. The first sealing member 151 is pressed between the connecting portion 52 and the first valve seat portion 41, and the first sealing member 151 abuts against the connecting portion 52 and the first valve seat portion 41. The first sealing member 151 is located between the supporting portion 412 and the connecting portion 52, the supporting portion 412 and/or the connecting portion 52 have a first groove 1511, and the first sealing member 151 is accommodated in the first groove 1511. The first sealing member 151 is provided to prevent a working medium from leaking to the outside of the electric valve through a gap between the connecting portion 52 and the supporting portion 412. In the embodiment, the first groove 1511 is located at the valve body 11.

With reference to FIG. 2 to FIG. 6, the electric valve further has a second sealing member 152 which is located between the injection-molded body 132 and the sleeve 6. An inner side and an outer side of the second sealing member 152 abut against the injection-molded body 132 and the sleeve 6 respectively. The second sealing member 152 is pressed between the injection-molded body 132 and the sleeve 6. The second sealing member 152 is provided to prevent external moisture or harmful substances from entering a gap between the sleeve 6 and the coil assembly 13 to corrode the coil assembly 13 or other parts, thereby improving the service life and reliability of the electric valve. A lower end portion of the second sealing member 152 abuts against the crimping portion 411 or the connecting portion 52, or, a supporting gasket is provided on a lower side of the second sealing member 152 for supporting the second sealing member 152.

With reference to FIG. 2 to FIG. 6, in the embodiment, the electric valve further includes a third sealing member 153 and a fourth sealing member 154, and the third sealing member 153 and the fourth sealing member 154 are respectively located on two sides of the side hole 45. In the embodiment, the third sealing member 153 is located on a lower side of the external thread portion 83, and the third sealing member 153 is pressed between the second portion 417 of the first valve seat portion 41 and the valve body 11, or, the third sealing member 153 prevents the working medium from leaking to the outer side of the electric valve through a gap between the first valve seat portion 41 and the valve body 11. In other embodiments, the third sealing member 153 may be provided between the first portion 416 and the valve body 11. The fourth sealing member 154 is pressed between the valve port portion 44 of the second valve seat portion 42 and the valve body 11 to prevent the working medium in the first cavity 113 and the second cavity 114 from flowing through a gap between the valve port portion 44 and the valve body 11. In the embodiment, the valve seat assembly 4 further has grooves for accommodating the third sealing member 153 and the fourth sealing member 154. In other embodiments, the valve body 11 may be provided with grooves for accommodating the third sealing member and the fourth sealing member, or, each of the valve body 11 and the valve seat assembly 4 is provided with part of the grooves for accommodating the third sealing member and the fourth sealing member.

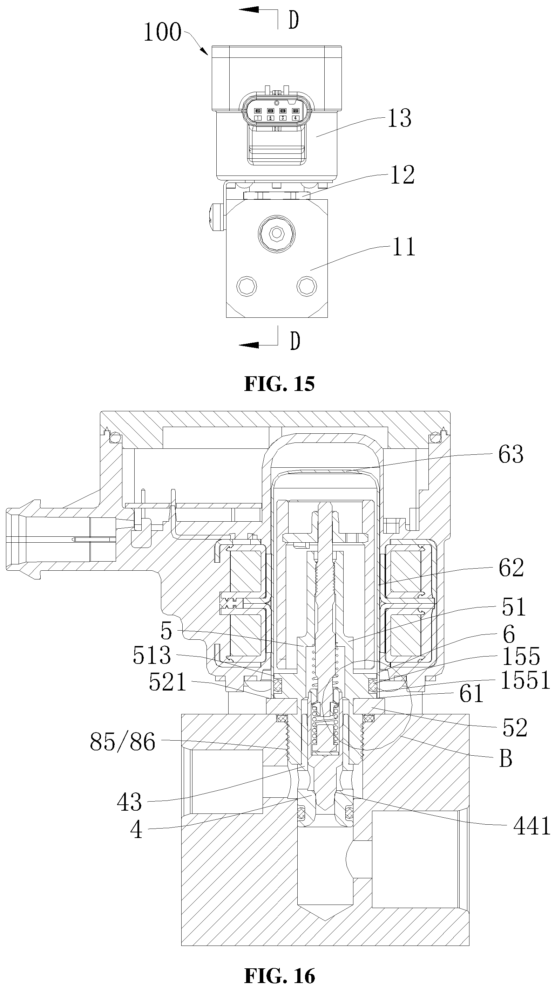

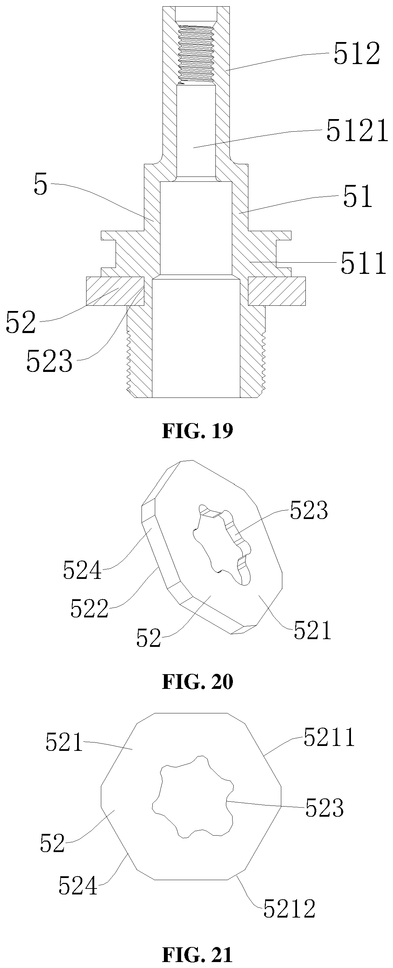

With reference to FIG. 15 to FIG. 21, an electric valve according to a second embodiment is illustrated. In the embodiment, the electric valve 100 includes a nut assembly 5, a valve seat portion 43, and a sleeve 6. The nut assembly 5 includes a plastic member 51 and a connecting portion 52. The connecting portion 52 is fixed to the plastic member 51 by injection molding, interference fit or gluing, or interference fit combined with gluing. In the embodiment, the connecting portion 52 is used as an injection-molded insert to form the nut assembly 5 or a portion of the nut assembly 5 by injection molding, and the plastic member 51 covers part of the connecting portion 52. In the embodiment, the plastic member 51 covers an inner portion of the connecting portion 52. In the embodiment, the connecting portion 52 is made of a metal material, and the sleeve 6 is made of a metal material, such as a stainless steel material. The plastic member 51 may specifically be made of a special engineering plastic or a composite material with certain strength, such as a mechanically reinforced polyetheretherketone (PEEK) or a modified polyetheretherketone (PEEK), or mechanically reinforced polyphenylene sulfide (PPS) or a modified polyphenylene sulfide (PPS). In the embodiment, the plastic member 51 is of an integrated structure and is integrally injection-molded. In other embodiments, the plastic member 51 may include separately formed structures which are fixedly or limitedly connected to form the plastic member 51. In the embodiment, the connecting portion 52 has a fixing reinforcement portion 523 at a position where the connecting portion 52 is connected to the plastic member 51, the fixing reinforcement portion 523 is located at an inner portion of the connecting portion 52, and at least part of the fixing reinforcement portion 523 is covered by the plastic member 51. For example, an inner periphery of the connecting portion 52 is of a non-circular structure. For example, the inner side of a cross section of an inner side wall of the connecting portion 52 may be square, hexagonal, or irregular circular with a partially straight edge, or quincuncial, or the like. This arrangement can improve the connection strength between the connecting portion 52 and the plastic member 51. Compared with the case where the inner side wall of the connecting portion 52 is of a circular structure, the connecting portion 52 can be prevented from rotating in a circumferential direction relative to the plastic member 51. In other embodiments, the inner periphery of the connecting portion 52 may be processed to form a groove structure, a protruding structure, a knurling structure or other structures with similar functions, or, the connecting portion 52 may be processed in an axial direction to form a through hole, a groove, a protrusion or other structure, or a combination of the above structures.

With reference to FIG. 15 to FIG. 21, in the embodiment, the sleeve 6 includes an opening portion 61, a sleeve body 62 and a sleeve top 63, and the opening portion 61 is integrated with the sleeve body 62. The opening portion 61 is located below the sleeve body 62, the sleeve top 63 is located above the sleeve body 62, and a top end of the sleeve 6 is closed by the sleeve top 63. The opening portion 61 is fixed to the connecting portion 52 by welding. The connecting portion 52 includes an upper end face portion 521, and the opening portion 61 is fixed to the upper end face portion 521 by welding. At least part of the upper end face portion 521 is located on an outer side of the opening portion 61 along a radial direction of the electric valve. The upper end face portion 521 includes a plane, for example, the entire upper end face portion 521 is a plane, or, most of the upper end face portion 521 is a plane, and at least a portion of the upper end face portion 521 where the upper end face portion 521 is connected to the sleeve 6 is a plane. In the present application, the plane may be allowed to have a certain roughness. The upper end face portion 521 is located at an upper surface of the connecting portion 52. The opening portion 61 abuts against the upper end face portion 521, and is fixed to the upper end face portion 521 by welding. At least part of the upper end face portion 521 is located on an outer side of the opening portion 61 along the radial direction of the electric valve, or, there is a predetermined distance between an outer edge of the opening portion 61 and at least part of an outer edge of the upper end face portion 521. The sleeve 6 cooperates with the upper end face 521 of the connecting portion 52 in the above manner, which facilitates simplifying the welding structure of the electric valve. The upper surface of the connecting portion 52 may be set as a plane, and the entire upper end face portion 521 may be a plane, so that the processing of the connecting portion 52 is convenient. For example, the connecting portion 52 may be formed by stamping, forging, or warm upsetting, etc., thereby reducing or omitting a machining step of the connecting portion 52, and reducing the processing cost. In addition, compared with the case where a stepped structure is provided to be matched with the opening portion 61 of the sleeve 6 and then is welded to the opening portion 61, the height of the connecting portion 52 can be reduced, and thus the overall height of the electric valve can be reduced.

In the embodiment, the upper end face portion 521 is a plane, the distance between the outer edge of the opening portion 61 and the outer edge of the upper end face portion 521 is greater than or equal to 0.4 mm along the radial direction of the electric valve, and the opening portion 61 is fixed to the connecting portion 52 by laser welding, so that a good welding penetration can be achieved, and the welding quality of the welding point can be improved. In order to achieve a good welding effect, the distance between the outer edge of the opening portion 61 and the outer edge of the upper end face portion 521 is greater than or equal to 0.5 mm. Moreover, in the embodiment, the gap between the sleeve 6 and the connecting portion 52 is sealed by a welding surface.

In another embodiment, with reference to FIG. 15 to FIG. 21, the upper end face portion 521 is a plane, and the outer edge of the upper end face portion 521 includes a first edge 5211 and a second edge 5212. An outer diameter of the second edge 5212 is greater than that of the first edge 5211. In the embodiment, the first edge 5211 is a portion of the outer edge of the upper end face portion 521 where the outer diameter of the outer edge of the upper end face portion 521 is the smallest, and the second edge 5212 is a portion of the outer edge of the upper end face portion 521 where the outer diameter of the outer edge of the upper end face portion 521 is the largest. The outer edge of the opening portion 61 does not extend beyond the first edge 5211, the distance between at least part of the outer edge of the opening portion 61 and the second edge 5212 is greater than or equal to 0.4 mm, and the opening portion 61 is laser-welded to the connecting portion 52. The outer edge of the connecting portion 52, i.e., the upper end face portion 521, may not be in a regular circular shape, for example, the upper end face portion 521 is hexagonal or substantially hexagonal, or the upper end face portion 521 is restricted by the radial dimension of the connecting portion 52, so it is allowed that part of the outer edge of the opening portion 61 is flush or nearly flush with the outer edge of the connecting portion 52, but not extend beyond the outer edge of the connecting portion 52. That is, the outer edge of the opening portion 61 does not extend beyond the first edge 5211, and the distance between at least part of the outer edge of the opening portion 61 and the second edge 5212 is greater than or equal to 0.4 mm. For example, in the embodiment described later, the connecting portion 52 has a matching portion 524 which is located at the outer periphery of the connecting portion 52. The matching portion 524 is substantially hexagonal, that is, the outer edge of the connecting portion 52 is substantially hexagonal. Part of the outer edge of the opening portion 61 may be allowed to be flush or nearly flush with a portion of the outer edge of the connecting portion 52 having a small diameter, but does not extend beyond the outer edge of the connecting portion 52. In a preferred embodiment, the distance between the outer edge of the opening portion 61 and the first edge 5211 is greater than or equal to 0.4 mm.

With reference to FIG. 15 to FIG. 21, in the embodiment, the sleeve 6 is of an integrated structure, and the sleeve 6 is integrally formed for example by stamping, stretching, etc., which is convenient for processing. The sleeve body 62 is provided with equal diameter, and the opening portion 61 and the sleeve body 62 are provided with equal diameters. The opening portion 61 is perpendicular to the upper end face portion 521, the term "perpendicular" includes approximately perpendicular, and equal diameter herein means that inner diameters are equal. The opening portion 61 includes a first lower end face 611 which abuts against the upper end face portion 521 and is laser-welded to the upper end face portion 521. In the embodiment, the outer diameter of the opening portion 61 and the outer diameter of the sleeve body 62 are also equal. This arrangement can simplify the processing of the sleeve 6.

With reference to FIG. 15 to FIG. 21, in the embodiment, the plastic member 51 is provided with a sleeve positioning portion 513 which is formed at the main body portion 511 of the plastic member 51. The sleeve 6 is sleeved on an outer periphery of the sleeve positioning portion 513, and the sleeve positioning portion 513 abuts against an inner peripheral wall of the sleeve 6. The sleeve positioning portion 513 limits a radial position of the sleeve 6, thereby limiting the position of the sleeve 6 relative to the connecting portion 52 and improving the positioning precision of the sleeve 6 and the connecting portion 52. In the embodiment, the sleeve 6 is in interference fit with the sleeve positioning portion 513, which facilitates improving the positioning accuracy and the coaxiality of the electric valve. In other embodiments, the sleeve 6 may also be positioned by means of an external tool.

In the embodiment, the plastic member 51 of the nut assembly 5 is provided with a first external thread 85 which is located at an outer periphery of the plastic member 51 and located on a lower side of the connecting portion 52. The electric valve further includes a valve body 11 which has a valve body cavity 115. The valve body 11 is provided with a first internal thread 86 engaged with the first external thread 85, the first internal thread 86 is located at a wall forming the valve body cavity 115, and the nut assembly 5 is fixed to the valve body 11 by threaded engagement. In the embodiment, a lower end face portion 522 of the connecting portion 52 abuts against the valve body 11, thereby limiting the position of the connecting portion 52 relative to the valve body 11. This arrangement is beneficial to reducing the risk of salt spray corrosion at the threaded engagement.

Compared with the electric valve according to the first embodiment, in the embodiment, the electric valve includes a valve seat portion 43, the valve port 441 is located at the valve seat portion 43, and the valve seat portion 43 is in threaded fit or tight fit with the nut assembly 5, or is engaged with the nut assembly 5 by threaded fit in combination with gluing, or is engaged with the nut assembly 5 by tight fit in combination with gluing. In this way, the structure of the electric valve can be simplified, and relatively fewer parts are required.

The connecting portion 52 has the matching portion 524 which is located at an outer peripheral wall of the connecting portion 52 or located at an upper end face of the connecting portion 52. An external tool can fit with the matching portion 524 to screw the connecting portion 52 and the valve body 11 to limit the position. The connecting portion 52 is a force-bearing member for threaded connection, for example, an outer contour of the connecting portion 52, i.e., an outer peripheral wall of the connecting portion 52, may be suitable for an assembling tool such as a wrench to exert force, and the outer shape of a cross section of the outer contour of the connecting portion 52 may be square, hexagonal, a quincunx, or an irregular circle with parallel opposite sides for bearing force, or the like. In the embodiment, the outer contour of the connecting portion 52 is hexagonal, and the outer edge of the opening portion 61 does not extend beyond a portion of the connecting portion 52 with the smallest outer diameter. The connecting portion 52 may also be of other structures, for example, a groove is formed in the upper end face of the connecting portion 52, and an external tool is provided with a protruding structure fitting with the groove, so that the connecting portion 52 is in threaded connection with the valve body 11. The lower end face of the connecting portion 52 abuts against the valve body 11, limiting the lowermost position of the connecting portion 52 relative to the valve body 11. There is a sealing member between the connecting portion 52 and the valve body 11, or there is a sealing member between the plastic member 51 and the valve body 11.

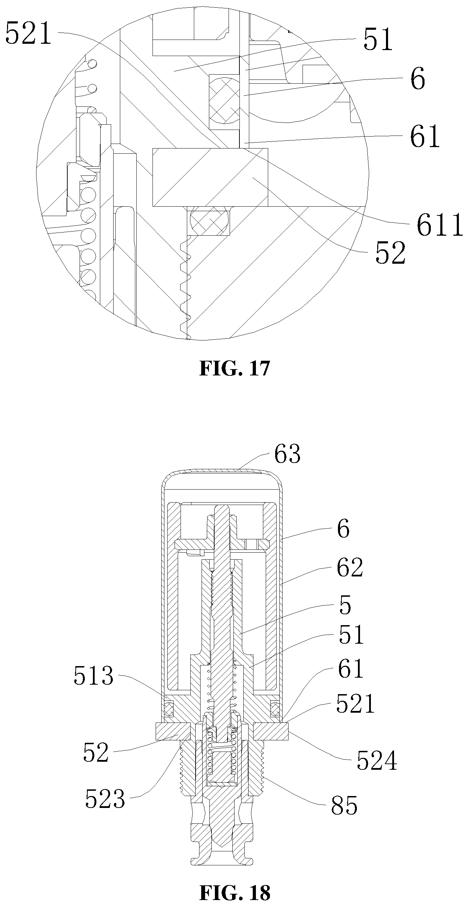

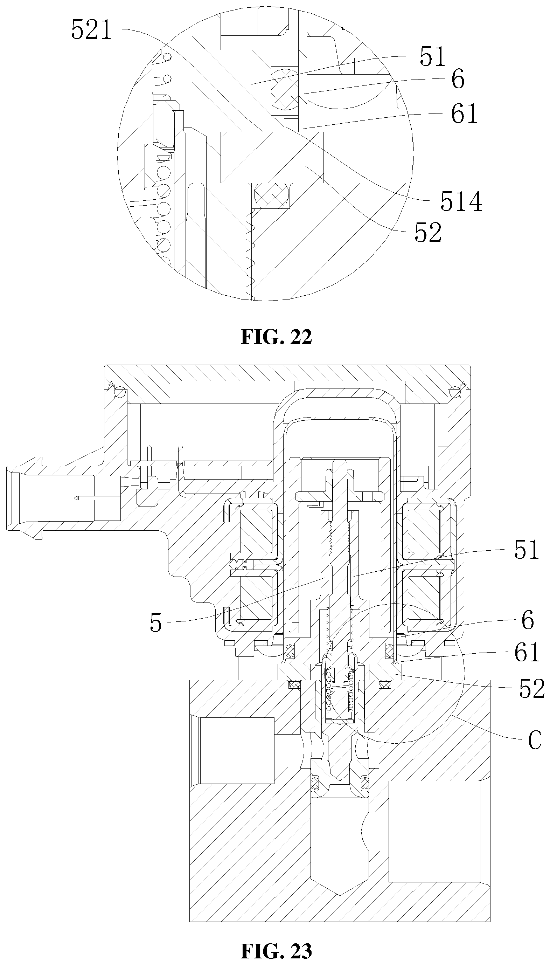

Referring to FIG. 22, combined with FIG. 16 and FIG.17, in a variation of the embodiment, the plastic member 51 may be further provided with an avoidance portion 514 which is provided opposite to the opening portion 61. The avoidance portion 514 is not in contact with the opening portion 61, and the avoidance portion 514 is recessed in a direction away from a matching part between the opening portion 61 and the connecting portion 52. When the opening portion 61 is welded to the connecting portion 52, the arrangement of the avoidance portion 514 may reduce heat transferred to the plastic member 51 during welding, thereby improving the thermal influence of welding on the injection-molded member.

The electric valve may further include a sealing component 155, the sleeve positioning portion 513 has a second groove 1551, and the sealing component 155 is located in the second groove 1551. The sealing component 155 is pressed between the inner peripheral wall of the sleeve 6 and an inner side wall forming the second groove 1551. The sealing component 155 is provided to avoid adverse effects caused by incomplete sealing of the welding part between the opening portion 61 of the sleeve 6 and the connecting portion 52.

Part of the structure of the electric valve according to the embodiment may be described with reference to the first embodiment above.

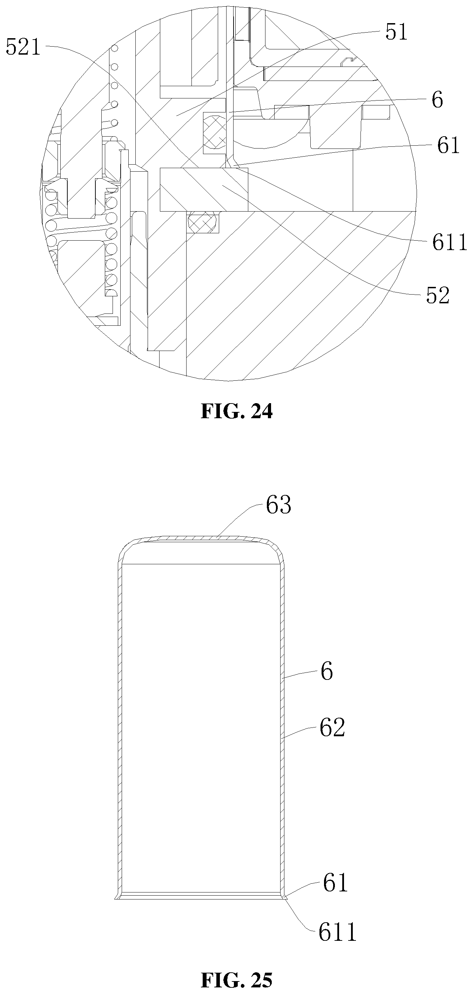

With reference to FIG. 23 to FIG. 25, the electric valve according to a third embodiment is illustrated. Compared with the electric valve according to the second embodiment, the sleeve 6 similarly includes a sleeve body 62, and the opening portion 61 is integrated with the sleeve body 62. The opening portion 61 is located below the sleeve body 62, the sleeve body 62 is provided with equal diameter, and the minimum outer diameter of the opening portion 61 is equal to the outer diameter of the sleeve body 62. The diameter of the opening portion 61 increases from top to bottom or increases downward, along the axial direction of the electric valve. The opening portion 61 includes a first lower end face 611. The first lower end face 611 abuts against the upper end face portion 521, and is fixed to the upper end face portion 521 by laser welding. In this way, the heat transferred to the plastic member 51 during welding can be reduced when the opening portion 61 is welded to the connecting portion 52, thereby improving the thermal influence of welding on the injection-molded member. An avoidance portion 514 may be further provided. Other structures of the electric valve according to the embodiment may be described with reference to the above embodiments.

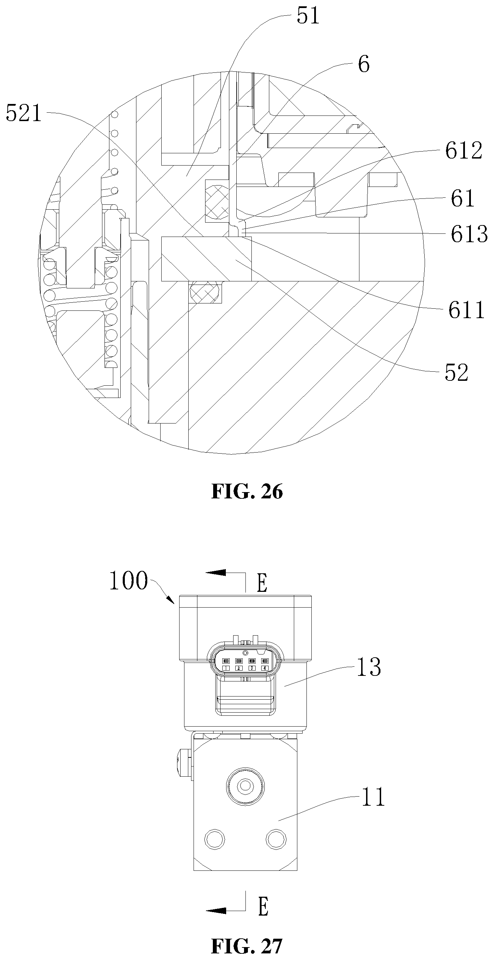

Referring to FIG. 26, combined with FIG. 23 to FIG. 25, an electric valve according to a fourth embodiment is illustrated. Compared with the electric valve according to the second embodiment, the sleeve 6 similarly includes a sleeve body 62, and the opening portion 61 and the sleeve body 62 are of an integral structure. The opening portion 61 is located below the sleeve body 62, the sleeve body 62 is provided with equal diameter, and the outer diameter of the opening portion 61 is greater than the outer diameter of the sleeve body 62. The opening portion 61 is parallel to the sleeve body 62, and the term "parallel" herein includes approximately parallel. Specifically, in the embodiment, the opening portion 61 includes a radial extension portion 612 and an axial extension portion 613, the radial extension portion 612 is located between the axial extension portion 613 and the sleeve body 62, and an outer diameter of the axial extension portion 613 is greater than an outer diameter of the radial extension portion 612. The axial extension portion 613 is parallel to the sleeve body 62. The opening portion 61 abuts against the connecting portion 52 and is fixed to the connecting portion 52 by laser welding. In this way, similarly, the heat transferred to the plastic member 51 during welding can be reduced when the opening portion 61 of the sleeve 6 is welded, thereby improving the thermal influence of welding on the injection-molded member. An avoidance portion 514 may be further provided. Other structures of the electric valve according to the embodiment may be described with reference to the above embodiments.

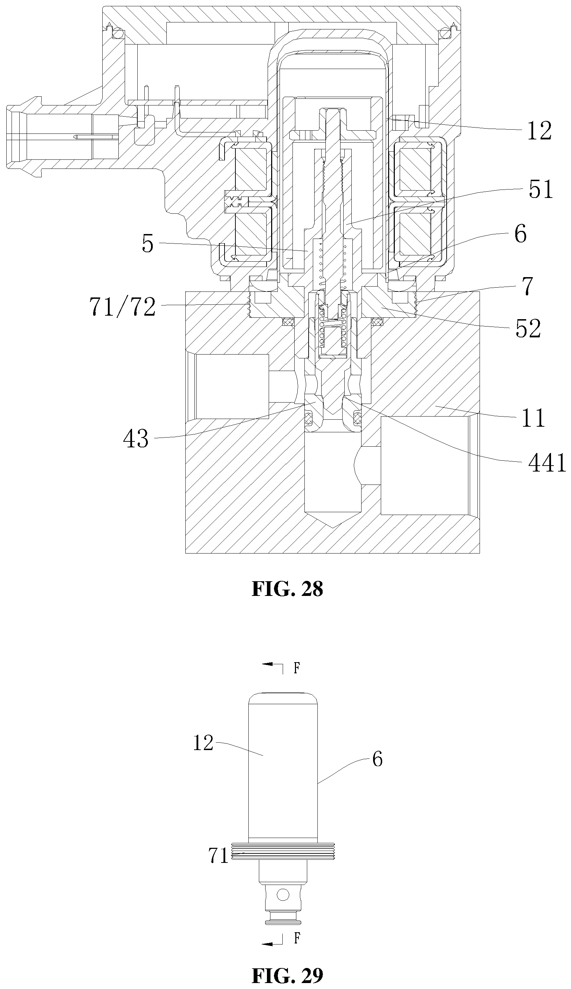

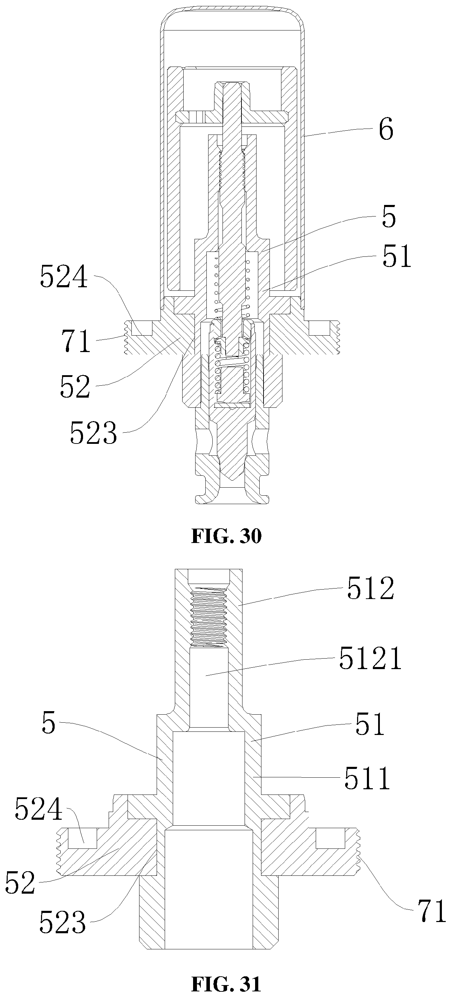

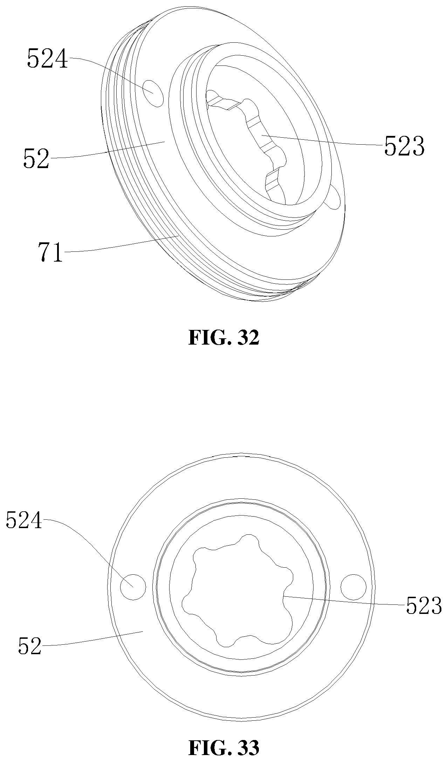

With reference to FIG. 27 to FIG. 33, an electric valve according to a fifth embodiment is illustrated. In the embodiment, the electric valve includes a valve component 12 and a valve body 11, and the valve component 12 can be mounted on the valve body 11. The valve component 12 includes a nut assembly 5 and a sleeve 6, the nut assembly 5 includes a plastic member 51 and a connecting portion 52, and the connecting portion 52 is fixed to the plastic member 51 by injection molding, interference fit, or gluing, or by interference fit in combination with gluing, etc. In the embodiment, the plastic member 51 covers part of the connecting portion 52, and the sleeve 6 is fixedly connected to the connecting portion 52 by welding, bonding, or others. The welding may be, for example, laser welding or brazing. In the embodiment, the connecting portion 52 is provided with a stepped structure to be matched with the sleeve 6. The connection between the connecting portion 52 and the sleeve 6 may also refer to the electric valve according to any one of the second embodiment to the fourth embodiment. The valve component 12 further has a connecting structure 7 which is formed at the connecting portion 52 or connected to the connecting portion 52. The valve component 12 is fixedly connected to the valve body 11 through the connecting structure 7. The connecting structure 7 is formed at the connecting portion 52 or connected to the connecting portion 52, the valve component 12 is fixedly connected to the valve body 11 through the connecting structure 7, so that the connection of various parts of the electric valve is simplified, the connecting structure of the valve component is simplified, and the processing cost is further reduced. In the embodiment, the valve component 12, as a whole, is fixedly connected to the valve body 11 through the connecting portion 52. This arrangement can facilitate the structure of the electric valve, reduce the parts of the electric valve and simplify the installation of the electric valve. Part of the structure of the electric valve according to the embodiment may refer to or learn from the above embodiments, for example, the welding between the sleeve 6 and the connecting portion 52 may refer to the electric valve according to any one of the second embodiment to the fourth embodiment. The universal structures of various embodiments may also be used in combination.

With reference to FIG. 27 to FIG. 33, in the embodiment, the plastic member 51 covers an inner portion of the connecting portion 52. The connecting portion 52 is made of a metal material, such as a stainless steel material. The plastic member 51 is formed by injection molding with the connecting portion 52 as an injection-molded insert, or, the connecting portion 52 is used as an injection-molded insert to form the nut assembly 5 or part of the nut assembly 5 by injection molding. The plastic member 51 is formed by injection molding, and the connecting portion 52 is provided with a fixing reinforcement portion 523 which is located at the inner portion of the connecting portion 52, and at least part of the fixing reinforcement portion 523 is covered by the plastic member 51. The plastic member 51 may specifically be made of a special engineering plastic or a composite material with certain strength, such as a mechanically reinforced polyetheretherketone (PEEK) or a modified polyetheretherketone (PEEK), or a mechanically reinforced polyphenylene sulfide (PPS) or a modified polyphenylene sulfide (PPS). In the embodiment, the plastic member 51 is of an integrated structure and is integrally form by injection molding. In other embodiments, the plastic member 51 may include separately formed structures which are fixedly or limitedly connected to form the plastic member 51. In the embodiment, the connecting portion 52 has the fixing reinforcement portion 523 at a position where the connecting portion 52 is connected to the plastic member 51, the fixing reinforcement portion 523 is located at the inner portion of the connecting portion 52, and at least part of the fixing reinforcement portion 523 is covered by the plastic member 51. For example, an inner periphery of the connecting portion 52 is of a non-circular structure as a fixing reinforcement structure. For example, the inner side of a cross section of an inner side wall of the connecting portion 52 may be square, hexagonal, or irregular circular with partial straight edges, or quincunx, etc. This arrangement can improve the connection strength between the connecting portion 52 and the plastic member 51. Compared with the case where the inner side wall of the connecting portion 52 is of a circular structure, the connecting portion 52 can be prevented from rotating in the circumferential direction relative to the plastic member 51, improving the connection strength. In other embodiments, the inner periphery of the connecting portion 52 may be processed to form a groove structure, a protruding structure, a knurling structure or other structures with similar functions as a fixing reinforcement structure, the inner periphery of the connecting portion 52 may also be processed in the axial direction to form a through hole, a groove, a protrusion, a knurling or other structures as a fixing reinforcement structure, or, the fixing reinforcement structure arranged in the axial direction and the fixing reinforcement structure arranged in the circumferential direction are combined.

In the embodiment, the connecting structure 7 includes a first external thread portion 71 which is located at an outer peripheral wall of the connecting portion 52. The valve body 11 has a valve body cavity 115, and at least part of the connecting portion 52 is located in the valve body cavity 115. A wall forming the valve body cavity 115 is provided with a first internal thread portion 72 corresponding to the first external thread portion 71, and the connecting portion 52 is fixed to the valve body 11 by threaded engagement. In this way, the mounting of the valve component 12 and the valve body 11 can be simplified, and the structure of the valve component 12 can be simplified, and parts of the electric valve can be reduced. The connecting portion 52 further has a matching portion 524, the matching portion 524 is a groove formed at the connecting portion 52, and an opening of the groove is located on an upper wall of the connecting portion 52. An external tool can fit with the matching portion 524 to screw and fix the connecting portion 52 and the valve body 11. For example, the external tool is a tool with a protruding portion, the protruding portion of the tool extends into the groove on the upper side of the connecting portion 52, and the tool drives the connecting portion 52 to rotate so as to be in threaded engagement with the valve body 11, so that the valve component 12 is screwed and fixed to the valve body 11. This arrangement can facilitate the assembly of the valve component 12 and the valve body 11, simplify the installation structure, and facilitate processing and forming of the connecting portion 52. A lower end of the connecting portion 52 abuts against the valve body 11 to limit the lowest position of the connecting portion 52 relative to the valve body 11. In the embodiment, the valve body 11 is further provided with a stepped structure, and the connecting portion 52 is located in a groove formed by the stepped structure and abuts against a bottom wall of the stepped structure.

In another embodiment, the matching portion 524 is a matching edge 4161 formed on an upper side of the first external thread portion 71. For example, a lower side of the outer peripheral wall of the connecting portion 52 is the first external thread portion 71, and an upper side of the outer peripheral wall of the connecting portion 52 is the matching edge 4161, and the matching edge 4161 is a force-bearing structure for threaded connection. The matching edge 4161 may be suitable for an assembling tool such as a wrench to exert force. The external shape of a cross section of an outer contour of the matching edge 4161 may be a square, hexagonal, a quincunx, or an irregular circle with parallel opposite sides for bearing force. In the embodiment, the matching edge 4161 is hexagonal, and serves as a force point for an assembling tool such as a wrench. This arrangement can also facilitate the assembly of the valve component 12 and the valve body 11 and simplify the installation structure.

In the embodiment, the valve component 12 includes a valve seat portion 43, and the valve seat portion 43 has a valve port 441. The valve seat portion 43 is in threaded fit or tight fit with the nut assembly 5, or is engaged with the nut assembly 5 by threaded fit in combination with gluing, or is engaged with the nut assembly 5 by tight fit in combination with gluing. Specifically, reference may be made to the electric valve according to any one of the second embodiment to the fourth embodiment. In other embodiments, the valve body 11 may be fixed to the connecting portion 52 by welding. The universal structures of various embodiments may be used in combination.

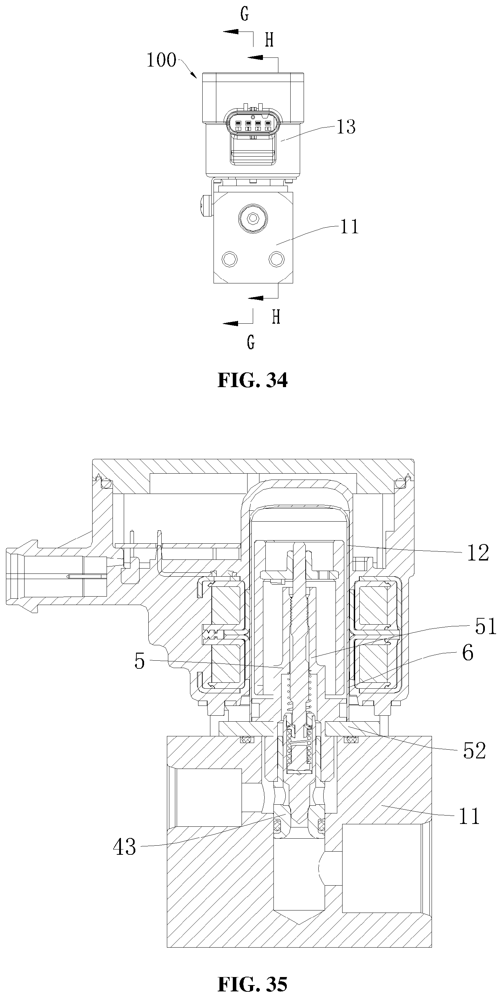

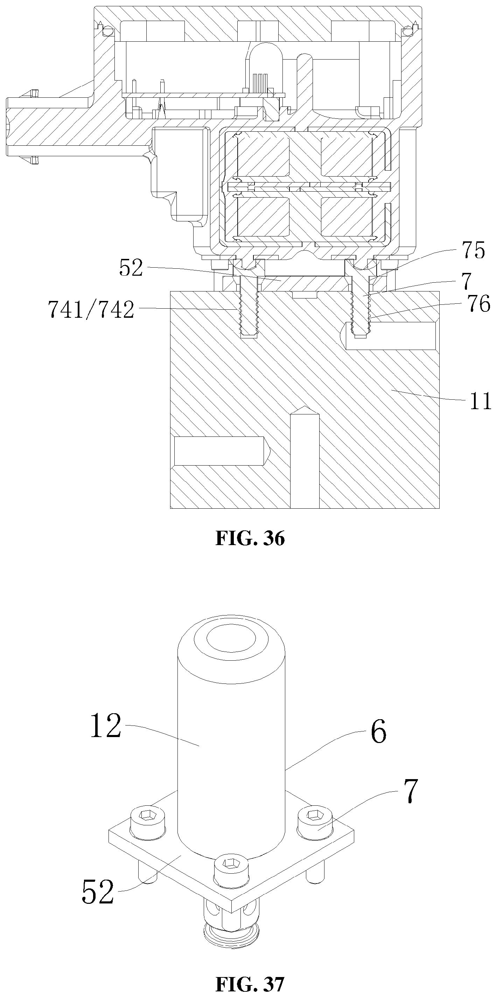

With reference to FIG. 34 to FIG. 38, an electric valve according to a sixth embodiment is illustrated. Compared with the electric valve according to the fifth embodiment, in the embodiment, the connecting structure 7 is a connecting member 74, and the connecting member 74 is substantially columnar. The connecting portion 52 has a communication hole 75. Along the axial direction of the electric valve, the communication hole 75 runs through the connecting portion 52. The connecting member 74 has an external thread fitting portion 741. An upper end of the valve body 11 has a connecting hole 76, and the connecting hole 76 opens toward the connecting portion 52. A wall forming the connecting hole 76 has an internal thread fitting portion 742 which is engaged with the external thread fitting portion 741. During assembly, the communication hole 75 is coaxial with and aligned with the connecting hole 76, the connecting member 74 passes through the communication hole 75 and is screwed into the connecting hole 76 by thread engagement, so that the connecting portion 52 is fixed to the valve body 11. At least part of the connecting member 74 is located in the communication hole 75, and at least part of the connecting member 74 is located in the connecting hole 76. The connecting member 74 is provided with a flange at the upper end of the connecting member 74, and an outer diameter of the flange is larger than an outer diameter of the connecting hole 76, so that the flange cannot pass through the connecting hole 76. The lower end of the connecting portion 52 abuts against the valve body 11 to limit the lowermost position of the connecting portion 52 relative to the valve body 11. Other structures of the embodiment may be described with reference to the above embodiments. The connecting member 74 includes a screw, a bolt or a similar structure. The number of the connecting members 74 corresponds to the number of the communication holes 75. The number of the connecting members 74 is more than two, and the number of the communication holes 75 is more than two. The communication holes 75 are evenly distributed on the outer periphery of the connecting portion 52. In the embodiment, there are four connecting members 74, four communication holes 75 and four connecting holes 76, which is beneficial to improving the reliability of the connection. With the connecting member 74 as the connecting structure 7, the connecting portion 52 is fixed to the valve body 11, which can also facilitate the assembly of the valve component 12 and the valve body 11 and simplify the installation structure. In another embodiment, the connecting member 74 does not have the external thread fitting portion 741, and part of the connecting member 74 is located in the connecting hole 76 of the valve body 11 and is in interference fit with the connecting hole 76, so as to fix the valve component 12 to the valve body 11.

Compared with the electric valve according to the fifth embodiment, in an electric valve according to another embodiment, the connecting structure 7 is a connecting member 74 which is annular. The connecting member 74 has an external thread fitting portion 741, a wall forming the valve body cavity 115 has an internal thread fitting portion 742 which is engaged with the external thread fitting portion 741. The valve body 11 has a first stepped portion 77, a lower end portion of the connecting portion 52 abuts against the first stepped portion 77, and the connecting member 74 is fixed to the valve body 11 by threaded engagement. A lower end portion of the connecting member 74 abuts against an upper end portion of the connecting portion 52, and the connecting portion 52 is pressed and limited between the connecting portion 52 and the valve body 11, so that the valve seat portion 43 is limited to the valve body 11. This arrangement can also facilitate the assembly of the valve component 12 and the valve body 11, simplify the installation structure and reduce parts of the electric valve. In another embodiment, the connecting member 74 does not have an external thread fitting portion 741, the connecting member 74 is annular, an outer side of the connecting member 74 is in interference fit with the valve body 11, and an inner side of the connecting member 74 is in interference fit with the connecting portion 52, so that the connecting portion 52 is limited to the valve body 11.

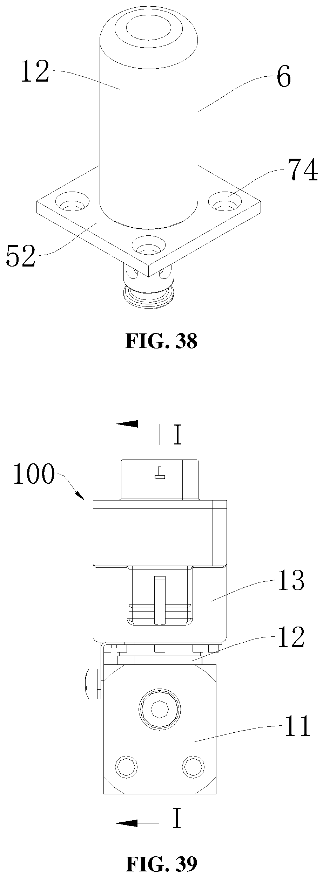

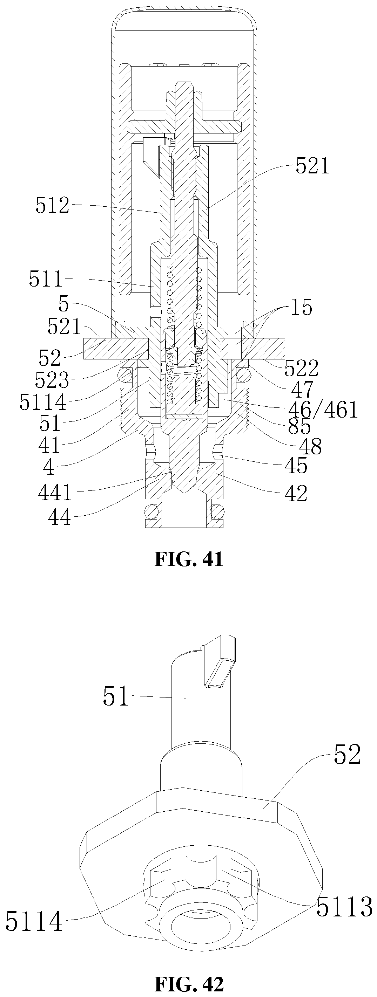

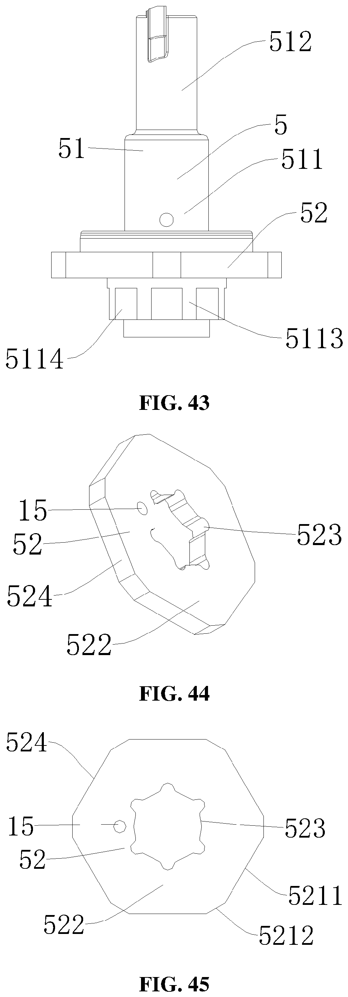

With reference to FIG. 39 to FIG. 45, an electric valve according to a seventh embodiment is illustrated. In the embodiment, the electric valve includes a nut assembly 5, a valve seat assembly 4, a valve core assembly 122, and a sleeve 6. The nut assembly 5 includes a plastic member 51 and a connecting portion 52. The connecting portion 52 is fixed to the plastic member 51 by injection molding or interference fit or gluing, or by interference fit combined with gluing. In the embodiment, the nut assembly 5 or part of the nut assembly 5 is formed by injection molding with the connecting portion 52 as an injection-molded insert. The plastic member 51 covers part of the connecting portion 52. For example, in the embodiment, the plastic member 51 covers an inner portion of the connecting portion 52. The plastic member 51 covers part of the connecting portion 52, for example, in the embodiment, the plastic member 51 covers an inner portion of the connecting portion 52. In the embodiment, the connecting portion 52 is made of a metal material, at least part of the structure of the valve seat assembly 4 is made of a metal material, and the sleeve 6 is made of a metal material, such as a stainless steel material. The sleeve 6 is fixedly connected to the connecting portion 52 by welding, etc. The plastic member 51 may specifically be made of a special engineering plastic or a composite material with certain strength, such as a mechanically reinforced polyetheretherketone (PEEK) or a modified polyetheretherketone (PEEK), or a mechanically reinforced polyphenylene sulfide (PPS) or a modified polyphenylene sulfide (PPS). In the embodiment, the plastic member 51 is of an integrated structure and is integrally formed by injection molding. In other embodiments, the plastic member 51 may have separately formed structures which are fixedly connected or limitedly connected to form the plastic member 51. In the embodiment, the connecting portion 52 has a fixing reinforcement portion 523 at a position where the connecting portion 52 is connected to the plastic member 51. The fixing reinforcement portion 523 is located at an inner portion of the connecting portion 52, and at least part of the fixing reinforcement portion 523 is covered by the plastic member 51. For example, an inner periphery of the connecting portion 52 is of a non-circular structure. For example, the inner side of a cross section of an inner side wall of the connecting portion 52 may be square, hexagonal, or irregular circular with partial straight edges, or quincunx, or the like. This arrangement can improve the connection strength between the connecting portion 52 and the plastic member 51. Compared with the case where the inner side wall of the connecting portion 52 is of a circular structure, the connecting portion 52 can be prevented from rotating in the circumferential direction relative to the plastic member 51. In other embodiments, the inner periphery of the connecting portion 52 may be processed to form a groove structure, a protruding structure, a knurling structure or other structures with similar functions, the inner periphery of the connecting portion 52 may be processed in the axial direction to form a through hole, a groove, a protrusion or other structures, or the inner periphery of the connecting portion 52 may be processed to form a combination of the above structures.

With reference to FIG. 39 to FIG. 45, in the embodiment, the valve seat assembly 4 includes a valve port portion 44, and the valve port portion 44 has a valve port 441. The electric valve further includes a valve core assembly 122, and the valve core assembly 122 can cooperate with the valve port 441 to adjust the opening degree of the valve port 441. The connecting portion 52 includes a lower end face portion 522 which is located at a lower wall of the connecting portion 52. The lower end face portion 522 includes a plane, for example, the entire lower end face portion 522 is a plane, or most of the lower end face portion 522 is a plane and at least a portion of the lower end face portion 522 where the lower end face portion 522 is connected to the valve seat assembly 4 is a plane. The plane in the present application may be allowed to have a certain roughness. The valve seat assembly 4 includes a first end portion 47 which is made of a metal material, and the first end portion 47 abuts against the lower end face portion 522 and is connected to the lower end face portion 522 by welding. The sleeve 6 is fixedly connected to the connecting portion 52, the first end portion 47 of the valve seat assembly 4 is fixed to the lower end face portion 522 by welding, and no additional matching structure is required to be processed at a matching portion between the valve seat assembly 4 and the connecting portion 52, which facilitates reducing the processing cost of the valve seat assembly. This arrangement is beneficial to simplify the structures of various parts and reduce the processing cost. In the embodiment, the lower end face portion 522 is located at the lower wall of the connecting portion 52, at least part of the lower end face portion 522 is located on an outer side of the first end portion 47 along the radial direction of the electric valve, and the lower end face portion 522 is fixed to the connecting portion 52 by laser welding. The lower end portion of the connecting portion 52 is set as a plane, which facilitates simplifying the processing of the connecting portion 52 and reducing the processing cost. With reference to the electric valve according to the second embodiment, this embodiment may be combined with the second embodiment, the entire upper end face portion 521 of the connecting portion 52 may be a plane, and the entire lower end face portion 522 of the connecting portion 52 may be a plane. This arrangement can facilitate the processing of the connecting portion 52. For example, the connecting portion 52 may be formed by stamping, forging or warm upsetting, etc., so that a machining step of the connecting portion 52 can be reduced or omitted, and the height of the connecting portion 52 can also be reduced, thereby reducing the overall height of the electric valve.

With reference to FIG. 39 to FIG. 45, in the embodiment, the valve seat assembly 4 includes a first valve seat portion 41, and the first valve seat portion 41 includes a first main body 48 and the first end portion 47. The first main body 48 is integrated with the first end portion 47, and the first end portion 47 is located above the first main body 48. The first end portion 47 abuts against the lower end face portion 522 and is fixed to the lower end face portion 522 by laser welding. Along the radial direction of the electric valve, a distance between an outer edge of the first end portion 47 and an outer edge of the lower end face portion 522 is greater than or equal to 0.4 mm, The first end portion 47 is laser-welded to the connecting portion 52. In the embodiment, the first end portion 47 and the first main body 48 have the same inner diameter and the same outer diameter. The first end portion 47 is perpendicular to the lower end face portion 522, where the term "perpendicular" includes substantially perpendicular, and the first end portion 47 is connected to the lower end face portion 522 by laser welding. In the embodiment, a sealing surface is formed by a welding surface. Part of the structure of the embodiment may refer to or learn from the above embodiments. The universal structures of various embodiments may also be used in combination.

With reference to FIG. 39 to FIG. 45, in the embodiment, the lower end face portion 522 is a plane, and the distance between the outer edge of the first end portion 47 and the outer edge of the lower end face portion 522 is greater than or equal to 0.4 mm along the radial direction of the electric valve, and the first end portion 47 is laser-welded to the connecting portion 52, so that a good welding penetration can be achieved, and the welding quality at the welding point can be improved. In order to achieve a good welding effect, the distance between the outer edge of the first end portion 47 and the outer edge of the lower end face portion 522 is greater than or equal to 0.5 mm. In the embodiment, a gap between the sleeve 6 and the connecting portion 52 is sealed by the welding surface.

With reference to FIG. 39 to FIG. 45, in another embodiment, the lower end face portion 522 is a plane, and the outer edge of the lower end face portion 522 includes a first edge 5211 and a second edge 5212. An outer diameter of the second edge 5212 is greater than an outer diameter of the first edge 5211. In the embodiment, the first edge 5211 is a portion of the outer edge of the lower end face portion 522 with the smallest outer diameter, and the second edge 5212 is a portion of the outer edge of the lower end face portion 522 with the largest outer diameter. The outer edge of the first end portion 47 does not extend beyond the first edge 5211, the distance between at least part of the outer edge of the first end portion 47 and the second edge 5212 is greater than or equal to 0.4 mm, and the first end portion 47 is laser-welded to the connecting portion 52. Since the outer edge of the connecting portion 52, i.e., the lower end face portion 522, may not be regular circular, for example, the outer edge of the connecting portion 52 is hexagonal or substantially hexagonal, or the outer edge of the connecting portion 52 may be restricted by the radial dimension of the connecting portion 52, it is allowed that part of the outer edge of the first end portion 47 is flush or nearly flush with the outer edge of the connecting portion 52, but does not extend beyond the outer edge of the connecting portion 52. That is, the outer edge of the first end portion 47 does not extend beyond the first edge 5211, and the distance between at least part of the outer edge of the first end portion 47 and the second edge 5212 is greater than or equal to 0.4 mm. For example, in the above embodiment, the connecting portion 52 has a matching portion 524 which is located at the outer periphery of the connecting portion 52. The matching portion 524 is substantially hexagonal, that is, the outer edge of the connecting portion 52 is substantially hexagonal. Part of the outer edge of the first end portion 47 may be allowed to be flush or nearly flush with a portion of the outer edge of the connecting portion 52 with small diameter, and does not extend beyond the outer edge of the connecting portion 52. In the embodiment, the gap between the sleeve 6 and the connecting portion 52 is sealed by the welding surface. In a preferred embodiment, the distance between the outer edge of the first end portion 47 and the first edge 5211 is greater than or equal to 0.4 mm.

With reference to FIG. 39 to FIG. 45, in the embodiment, the plastic member 51 of the nut assembly 5 includes a main body portion 511 and a nut portion 512. The main body portion 511 includes a valve seat positioning portion 5113. The valve seat assembly 4 includes an accommodating portion 46, the accommodating portion 46 has an accommodating cavity 461, and the valve seat positioning portion 5113 is located in the accommodating cavity 461. The valve seat positioning portion 5113 abuts against an inner peripheral wall of the first valve seat portion 41, and the valve seat positioning portion 5113 limits a radial position of the first valve seat portion 41, thereby limiting the radial position of the valve seat positioning portion relative to the connecting portion 52. In the embodiment, the valve seat positioning portion 5113 has multiple recessed portions 5114, and the recessed portions 5114 are provided to reduce the weight of the plastic member 51. Referring to the electric valve according to the second embodiment, the plastic member 51 may be provided with an avoidance portion 514, or the first end portion 47 expands outwards, which can reduce heat transferred to the plastic member 51 during welding and improve the thermal influence of welding on the injection-molded member. In the embodiment, the first valve seat portion 41 is in interference fit with the valve seat positioning portion 5113, which is beneficial to improving the positioning precision, thereby improving the coaxiality of the electric valve. In other embodiments, the valve seat assembly 4 may also be positioned by an external tool.

With reference to FIG. 39 to FIG. 45, in the embodiment, the valve seat assembly 4 further includes a second valve seat portion 42. The second valve seat portion 42 is further away from the connecting portion 52 than the first valve seat portion 41, along the axial direction of the electric valve. The valve port portion 44 is located at the second valve seat portion 42, and the first valve seat portion 41 is integrated with the second valve seat portion 42. The valve seat assembly 4 is formed by warm upsetting; or, a main body portion of the valve seat assembly 4 is formed by warm upsetting, and then a side hole 45, a groove, or the valve port 441, etc. is formed by machining, so as to form the valve seat assembly 4. This arrangement facilitates the formation of the valve seat assembly 4. Compared with completely forming the valve seat assembly 4 by machining, the processing consumables can be reduced and the cost can be reduced. In a variation of this embodiment, the valve seat assembly 4 is formed by metal stretching process; or, a main body portion of the valve seat assembly 4 is formed by metal stretching process, and then a side hole 45, a groove or the valve port 441, etc. is formed by machining, so as to form the valve seat assembly 4. This arrangement facilitates the formation of the valve seat assembly 4, and compared with forming the valve seat assembly 4 by machining, the processing consumables can be reduced and the cost can be reduced. The metal stretching process includes stretching, stamping and others.

With reference to FIG. 39 to FIG. 45, in the embodiment, the electric valve further includes a valve body 11, the valve body 11 is provided with a valve body cavity 115, and at least part of the valve seat assembly 4 is located in the valve body cavity 115. The first valve seat portion 41 is provided with a first external thread 85, and a wall forming the valve body cavity 115 is provided with a first internal thread 86 engaged with the first external thread 85. The valve seat assembly 4 is fixed to the valve body 11 by threaded engagement. The connection manner between the valve body 11 and the valve seat assembly 4 or the nut assembly 5 may refer to the above embodiments. For example, the first external thread 85 may be provided at the outer periphery of the connecting portion 52, the first internal thread 86 is provided at the valve body 11, and the connecting portion 52 is fixed to the valve body 11 by threaded engagement.

With reference to FIG. 39 to FIG. 45, in the embodiment, the electric valve has a balance channel 15. The balance channel 15 includes a groove formed by the valve seat positioning portion 5113 or the first valve seat portion 41, a through hole running through the connecting portion 52 in the axial direction, and a through hole running through the plastic member 51 in the axial direction. The balance channel 15 is communicated with a cavity formed by the valve seat assembly 4 and a cavity formed by the sleeve 6. A balance hole 14 may be formed by injection molding or post- processing.

In the embodiment, the valve seat assembly 4 further has a side hole 45 which is located above the valve port portion 44. The electric valve further includes a first sealing component and a second sealing component, where the first sealing component is located between the connecting portion 52 and the valve body 11 or located between the first valve seat portion 41 and the valve body 11, and the second sealing component is located between the second valve seat portion 42 and the valve body 11; or, the connecting portion 52 is connected to the valve body 11. The functions of the first sealing component and the function of the second sealing component may refer to the above embodiments. In a case that the first sealing component and the second sealing component are both located on the valve seat assembly, it is convenient for the valve component to be connected to the valve body as a whole.

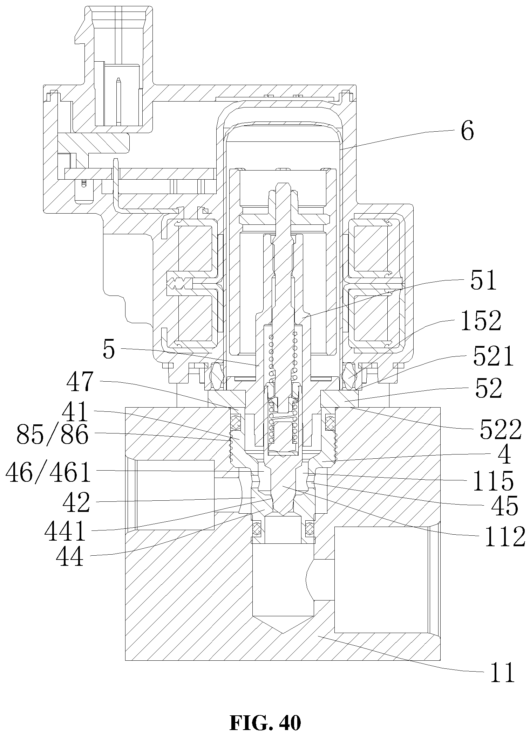

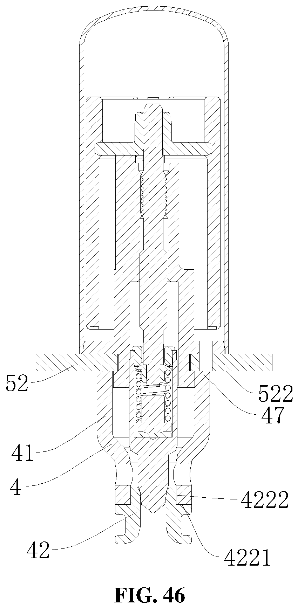

Referring to FIG. 46, combined with FIG. 40, in an electric valve according to another variation of the seventh embodiment, the first valve seat portion 41 and the second valve seat portion 42 are separate structures, which are separately formed and fixedly or limitedly connected to each other. The first valve seat portion 41 is integrally formed by warm upsetting process, or the first valve seat portion 41 is formed by metal stretching process, or the first valve seat portion 41 is formed by warm upsetting process in combination with machining, or the first valve seat portion 41 is formed by metal stretching process in combination with machining. The second valve seat portion 42 is fixed to the first valve seat portion 41 by welding or gluing or tight fit, or by tight fit in combination with gluing. This arrangement facilitates the formation of part of the valve seat assembly 4, and compared with forming the valve seat assembly 4 by machining, the processing consumables can be reduced and the cost can be reduced. In the embodiment, the second valve seat portion 42 has a step 422, and the step 422 includes a step bottom surface 4221 and a step side surface 4222. A bottom end of the first valve seat portion 41 abuts against the step bottom surface 4221, an inner peripheral wall of the first valve seat portion 41 abuts against the step side surface 4222, so that the radial position of the first valve seat portion 41 relative to the second valve seat portion 42 is limited. The second valve seat portion 42 is made of metal, or, a main body portion of the second valve seat portion 42 is made of resin, and a portion of the second valve seat portion 42 at the valve port is made of metal.

In the embodiment, the electric valve further includes a second sealing member 152, a lower end of the second sealing member 152 abuts against the connecting portion 52, and the second sealing member 152 is pressed between the injection-molded body 132 and the sleeve 6. The second sealing member 152 is provided to prevent external moisture or harmful substances from entering a gap between the sleeve 6 and the coil assembly 13, causing corrosion to the coil assembly 13 or other parts, thereby improving the service life and reliability of the electric valve.

Other structures of this embodiment may be described with reference to the above embodiments. Structures of various embodiments that can be combined by deduction are within the protection scope of the present application.

It should be noted that the above embodiments are only used to illustrate the present application and are not intended to limit the technical solutions described in the present application. Although the present application has been described in detail in the specification with reference to the above embodiments, those skilled in the art should understand that modifications or equivalent replacements can still be made to the present application by those skilled in the art. All technical solutions and improvements that do not depart from the spirit and scope of the present application should be included within the scope of the claims of the present application.

## Claims

1. An electric valve, comprising a nut assembly (5) and a sleeve (6), wherein
the nut assembly (5) comprises a plastic member (51) and a connecting portion (52), the connecting portion (52) is fixed to the plastic member (51), the connecting portion (52) is made of metal material, and the sleeve (6) is made of metal material; and
the sleeve (6) comprises an opening portion (61), the connecting portion (52) comprises an upper end face portion (521), the opening portion (61) is fixed to the upper end face portion (521) by welding, and at least part of the upper end face portion (521) is located on an outer side of the opening portion (61) along a radial direction of the electric valve.

2. The electric valve according to claim 1, wherein the upper end face portion (521) is located at an upper surface of the connecting portion (52), the upper end face portion (521) is a plane, a distance between an outer edge of the opening portion (61) and an outer edge of the upper end face portion (521) is greater than or equal to 0.4 mm along the radial direction of the electric valve, and the opening portion (61) is laser-welded to the connecting portion (52).

3. The electric valve according to claim 1, wherein
the upper end face portion (521) is located at an upper surface of the connecting portion (52), the upper end face portion (521) is a plane, an outer edge of the upper end face portion (521) comprises a first edge (5211) and a second edge (5212), and an outer diameter of the second edge (5212) is greater than an outer diameter of the first edge (5211); and
an outer edge of the opening portion (61) does not extend beyond the first edge (5211), a distance between at least part of the outer edge of the opening portion (61) and the second edge (5212) is greater than or equal to 0.4 mm, and the opening portion (61) is laser-welded to the connecting portion (52).

4. The electric valve according to any one of claims 1 to 3, wherein
the sleeve (6) further comprises a sleeve body (62), the opening portion (61) and the sleeve body (62) are of an integral structure, and the opening portion (61) is located below the sleeve body (62); and
the opening portion (61) is perpendicular to the upper end face portion (521), the opening portion (61) comprises a first lower end face (611), and the first lower end face (611) abuts against the upper end face portion (521) and is laser-welded to the upper end face portion (521).

5. The electric valve according to any one of claims 1 to 3, wherein
the sleeve (6) further comprises a sleeve body (62), the opening portion (61) and the sleeve body (62) are of an integral structure, and the opening portion (61) is located below the sleeve body (62); and
the opening portion (61) expands in diameter from top to bottom along an axial direction of the electric valve, the opening portion (61) comprises a first lower end face (611), and the first lower end face (611) abuts against the upper end face portion (521) and is laser-welded to the upper end face portion (521).

6. The electric valve according to any one of claims 1 to 3, wherein
the sleeve (6) further comprises a sleeve body (62), the opening portion (61) and the sleeve body (62) are of an integral structure, and the opening portion (61) is located below the sleeve body (62); and
the opening portion (61) comprises a radial extension portion (612) and an axial extension portion (613), the radial extension portion (612) is located between the axial extension portion (613) and the sleeve body (62), an outer diameter of the axial extension portion (613) is greater than an outer diameter of the sleeve body (62), and the axial extension portion (613) is parallel to the sleeve body (62).

7. The electric valve according to any one of claims 4 to 6, wherein the plastic member (51) is provided with a sleeve positioning portion (513), the sleeve (6) is sleeved on an outer periphery of the sleeve positioning portion (513), the sleeve positioning portion (513) abuts against an inner peripheral wall of the sleeve (6), and the sleeve positioning portion (513) limits a radial position of the sleeve (6).

8. The electric valve according to claim 7, wherein the plastic member (51) is provided with an avoidance portion (514) which is provided opposite to the opening portion (61), the avoidance portion (514) is not in contact with the opening portion (61), and the avoidance portion (514) is recessed in a direction away from a matching part between the opening portion (61) and the connecting portion (52).

9. The electric valve according to claim 7 or 8, further comprising a sealing component (155), wherein
the sleeve positioning portion (513) has a second groove (1551), the sealing component (155) is located in the second groove (1551), and the sealing component (155) is pressed between the inner peripheral wall of the sleeve (6) and an inner side wall forming the second groove (1551).

10. The electric valve according to claim 8 or 9, wherein
the plastic member (51) is provided with a first external thread (85), the first external thread (85) is located at an outer periphery of the plastic member (51) and is located on a lower side of the connecting portion (52); and
the electric valve further comprises a valve body (11) having a valve body cavity (115), the valve body (11) is provided with a first internal thread (86) engaged with the first external thread (85), the first internal thread (86) is located at a wall forming the valve body cavity (115), and the nut assembly (5) is limited to the valve body (11) by threaded engagement.

11. The electric valve according to claim 10, comprising a valve seat portion (43) having a valve port (441), wherein the valve seat portion (43) is in threaded fit or tight fit with the nut assembly (5), or is engaged with the nut assembly (5) by threaded fit in combination with gluing, or is engaged with the nut assembly (5) by tight fit in combination with gluing.

12. The electric valve according to claim 11, wherein
the connecting portion (52) is provided with a matching portion (524) which is located at an outer peripheral wall of the connecting portion (52) or located at an upper end face of the connecting portion (52), an external tool is matched with the matching portion (524) to screw the connecting portion (52) and the valve body (11) and limit the connecting portion (52) and the valve body (11); and
a lower end face of the connecting portion (52) abuts against the valve body (11), and a sealing member is provided between the connecting portion (52) and the valve body (11) or a sealing member is provided between the plastic member (51) and the valve body (11).

13. The electric valve according to any one of claims 1 to 3, further comprising a valve seat assembly (4), wherein the connecting portion (52) comprises a lower end face portion (522), the valve seat assembly (4) comprises a first end portion (47), the first end portion (47) is made of metal material, and the first end portion (47) is fixed to the lower end face portion (522) by welding.

14. The electric valve according to claim 13, wherein the lower end face portion (522) is located at a lower wall of the connecting portion (52), at least part of the lower end face portion (522) is located on an outer side of the first end portion (47) along the radial direction of the electric valve, and the lower end face portion (522) is fixed to the connecting portion (52) by laser welding.

15. The electric valve according to claim 14, wherein the lower end face portion (522) is a plane, a distance between an outer edge of the first end portion (47) and an outer edge of the lower end face portion (522) is greater than or equal to 0.4 mm along the radial direction of the electric valve, and the first end portion (47) is laser-welded to the connecting portion (52).
